# DEMANDE DE BREVET EUROPEEN

(11) **EP 1 220 477 A1**
(43) Date de publication de la demande: **03.07.2002**
(21) Numéro de dépôt: 01204956.5
(22) Date de dépôt: 18.12.2001
(51) Int. Cl.: H04B 7/26, H04B 7/15

(54) **Procédé et appareil pour relayer des données dans un système de télécommunication**

(30) Priorité: 28.12.2000 FR 0017201
(71) Demandeur: Koninklijke Philips Electronics N.V., 5621 BA Eindhoven (NL)
(72) Inventeur: Chabas, Jean Alain, 75008 Paris (FR)
(74) Mandataire: Chaffraix, Jean

(57) **Abrégé**

Cet appareil de télécommunications (21, 22 ou 23) fait partie d'un système comprenant des stations de base (10, 12). Ce système permet aux appareils qui le composent de se relayer l'information. On propose de munir les appareils d'une pluralité de dispositifs d'émission-réception (RX1, RX2,...RXm, TX1, TX2,...Xn) pour échanger de l'information avec d'autres appareils et/ou des stations de base.

## Description

L'invention concerne un appareil de télécommunications pour un système comprenant au moins une station de base et une pluralité de stations secondaires munies de circuits pour se relayer de l'information.
L'invention concerne aussi un système de transmission comprenant au moins un tel appareil.
L'invention concerne encore un procédé de transmission mis en oeuvre dans un tel système.
L'invention trouve des applications lorsque la technique de transmission, connue sous le nom de « ODMA » (en langue anglaise Opportunity Driven Multiple Access), est utilisée. Selon cette technique, des mobiles qui reçoivent un message provenant d'une station de base et destiné à un autre mobile, peuvent re-émettre ce message vers cet autre mobile s'il est hors de portée de la station de base. Autrement dit, cette technique propose d'utiliser toutes les stations du système comme relais d'informations. Ainsi si une station n'arrive pas à se raccorder à une station de base, elle peut quand même se connecter en utilisant d'autres stations mobiles comme relais. On trouvera dans l'ouvrage : « WCDMA for UMTS » de Harri Holma et Antti Toskala, édité par Wiley, des renseignements plus détaillés concernant cette technique ODMA.

La présente invention propose un appareil du genre mentionné dans le préambule qui présente des performances accrues dans une large mesure.
Pour cela, un tel appareil est remarquable en ce que les stations secondaires comportent une pluralité de dispositifs d'émission-réception pour échanger de l'information avec d'autres stations (de base et/ou secondaires).

L'idée de l'invention consiste donc à utiliser l'enseignement apporté par l'architecture connue sous le nom de « MIMO » qui propose de multiplier pour chaque station secondaire le nombre de dispositifs d'émission-réception. L'idée consiste aussi à profiter du système pour améliorer encore la technique MIMO en ajoutant des trajets de transmission, en faisant jouer encore plus la diversité. Cette architecture est décrite dans des articles tels que, par exemple : « Capacity results on frequency-selective Rayleigh MIMO channels » de Daniel Pérez et al, paru dans les Conf IST-Irlande en octobre 2000 aux pages 491 à 496.

La description suivante, faite en regard des dessins ci-annexés, le tout donné à titre d'exemples non limitatifs fera bien comprendre comment l'invention peut être réalisée. Sur les dessins :
La figure 1 montre un système comprenant au moins un appareil conforme à l'invention,
La figure 2 montre plus en détail la structure d'un appareil conforme à l'invention.

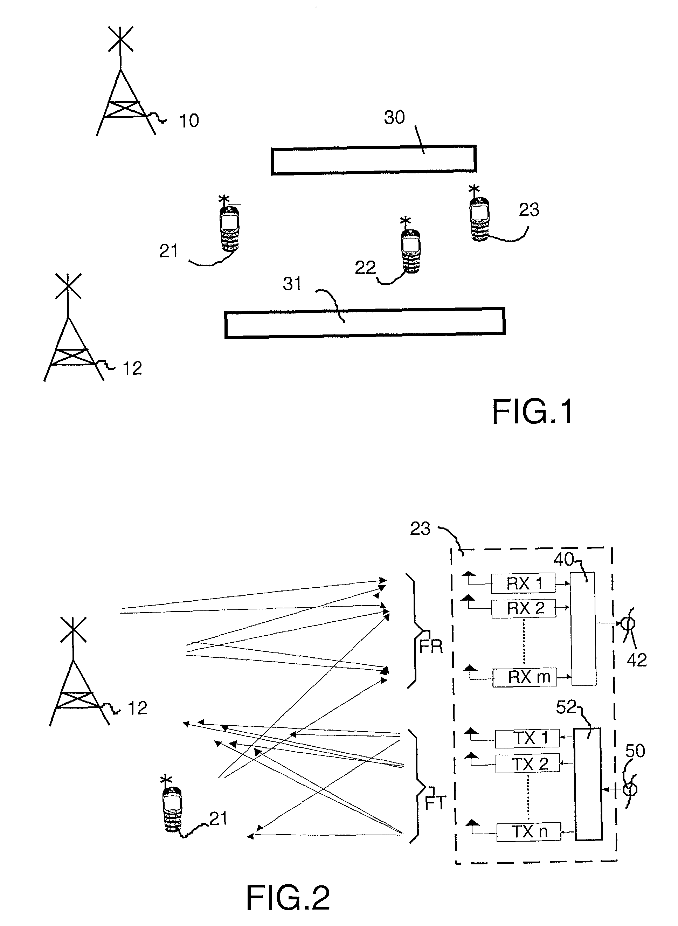

A la figure 1, on a représenté un système cellulaire dans lequel la technique ODMA est mise en application. Le système comporte deux stations de base 10 et 12 et une pluralité de stations secondaires 21, 22, 23, qui sont les appareils de télécommunications, objets de la présente invention. Les rectangles portant les références 30 et 31 sont des obstacles à la transmission, par exemple des immeubles. Si la station secondaire 21 peut communiquer avec les stations de base 10 et 12, il n'en est pas de même des stations secondaires 22 et 23. Ainsi, la station 22 peut à la limite communiquer avec la station de base 12 mais pas du tout avec la station 10, tandis que la station 23 est incapable de communiquer avec ces deux stations de base 10 et 12. Pour que cette dernière station secondaire puisse quand même communiquer, la technique ODMA propose que les stations secondaires puissent relayer les communications. Dans l'exemple décrit la station 23 peut communiquer grâce à un relais de la station 21. Il est entendu que ces deux stations secondaires sont, à cet effet, proches l'une de l'autre.
La figure 2 montre plus en détail la structure de la station secondaire 23. Conformément à l'invention elle est essentiellement constituée d'une pluralité de dispositifs de réception RX1 à RXm et d'une pluralité de dispositifs de réception TX1 à TXn. Les différents dispositifs de réception RX1 à RXm fournissent leur information à un circuit de traitement 40 pour établir une information utile à un accès de réception 42 pour utilisation. D'une manière similaire, une information utile à transmettre, disponible sur un accès d'émission 50 est distribuée au moyen d'un circuit de traitement d'émission 52 aux différents dispositifs d'émission TX1 à TXn. Le nombre de dispositifs d'émission peut être égal au nombre de dispositifs de réception (m=n). Cette station secondaire présente donc une structure d'un type connu sous le nom précité de MIMO. Ces dispositifs d'émission et ces dispositifs de réception peuvent trafiquer avec la seule station 21. Mais il est aussi possible qu'un certain nombre de ces dispositifs d'émission trafiquent avec la station de base tandis que les autres trafiquent avec la station secondaire 21. Ceci est montré sur la figure par les flèches FT et FR qui indiquent respectivement l'émission et la réception pour la station 23. On rappelle que la fonction de relais ou de répéteur effectuée par la station 21 permet un traitement amélioré, car la diversité est assurée dans ce cas, au niveau de la station 23.

Par l'invention :
- on étend le concept de l'architecture MIMO au mode répéteur du fonctionnement dans un réseau cellulaire et d'une manière plus particulière pour le mode ODMA et pour FDD (Frequency Division Diversity),
- on contribue à réduire le niveau de bruit dans les petites cellules pour lesquelles le mode ODMA est mis en application et de là on améliore la qualité des services offerts par le réseau et la capacité de trafic de la cellule,
- on contribue aussi à améliorer le processus de passage entre ces modes. On a un traitement en parallèle des données transmises, ce qui permet un passage dans le mode TDD (Time Division Diversity) comme cela est fait dans le mode FDD.

## Revendications

1. Appareil de télécommunications pour un système comprenant au moins une station de base et une pluralité de stations secondaires munies de circuits pour se relayer de l'information, **caractérisé en ce que** les stations secondaires comportent une pluralité de dispositifs d'émission-réception pour échanger de l'information avec d'autres stations (de base et/ou secondaires).

2. Appareil de télécommunications selon la revendication 1, **caractérisé en ce que** le système est un système de type ODMA.

3. Appareil de télécommunications selon la revendication 1 ou 2, **caractérisé en ce que** la pluralité de dispositifs d'émission-réception est du type MIMO.

4. Système de télécommunications comprenant au moins une station de base et une pluralité de stations secondaires selon la revendication 1 ou 2 ou 3 munies de circuits pour se relayer de l'information, **caractérisé en ce que** les stations secondaires comportent une pluralité de dispositifs d'émission-réception pour échanger de l'information avec d'autres stations (de base et/ou secondaires).

5. Système de télécommunications selon la revendication 4, **caractérisé en ce qu'**il est du type ODMA.

6. Procédé de transmission pour un système de télécommunications comprenant au moins une station de base et une pluralité de stations secondaires selon la revendication 1 ou 2 ou 3 munies de circuits pour se relayer de l'information, **caractérisé en ce que** pour assurer une transmission il comporte une étape selon laquelle les stations secondaires effectuent des émissions en diversité d'espace et des réceptions, aussi en diversité d'espace.
